# EUROPEAN PATENT SPECIFICATION

(11) **EP 1 011 239 B1**
(45) Date of publication and mention of the grant of the patent: **18.10.2006**
(21) Application number: 99123190.3
(22) Date of filing: 24.11.1999
(51) Int. Cl.: G06F 9/46, H04L 29/08, H04L 29/06

(54) **System for routing messages to agents**
System zur Weiterleitung von Nachrichten zu Agenten
Système de routage de messages à destination d'agents

(30) Priority: 24.11.1998 JP 33279798
(43) Date of publication of application: 21.06.2000
(73) Proprietor: OMRON CORPORATION, Kyoto-shi, Kyoto 616 (JP)
(72) Inventor: Shigemori, Yutsuka, Hanazono, Ukyo-ku, Kyoto 616 (JP)
(74) Representative: Käck, Jürgen

(56) References cited:
- WO-A-98/21662
- US-A- 5 790 789
- WONG D ET AL: "CONCORDIA: AN INFRASTRUCTURE FOR COLLABORATING MOBILE AGENTS" MOBILE AGENTS INTERNATIONAL WORKSHOP, XX, XX, 7 April 1997 (1997-04-07), pages 86-97, XP002046843
- PEINE H ET AL: "The architecture of the Ara platform for mobile agents" MOBILE AGENTS INTERNATIONAL WORKSHOP, XX, XX, 7 April 1997 (1997-04-07), pages 50-61, XP002109513

## Description

### Field of the invention

This invention concerns a firewall comprising a switching agent system. An "Agent system" is a system program to control the processing for generating, deleting, and moving an agent. In other words, an agent system is defined by a portion of communication device which functions as above. Communication device in this specification means a control device containing an agent system, which may include a computer, programmable controller, or other programmable device.

### Background of the invention

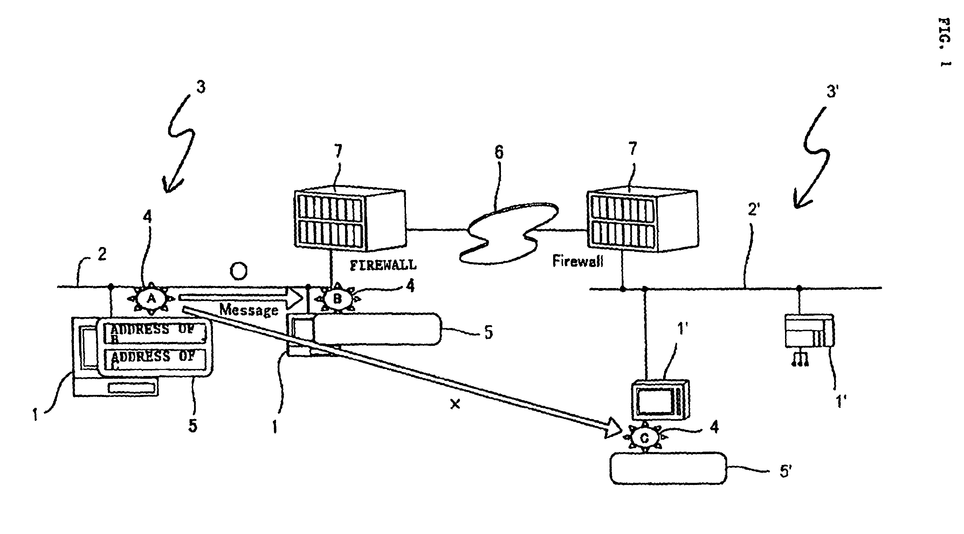

As shown in Figure 1, a plurality of various communication devices 1 (PLC, Personal computers etc.) are connected via communication line 2, which is cable or cordless, in network 3. Each communication device may transmit a program (hereinafter called "agent") to other devices. The agent travels to other devices by itself, and performs a target processing at the destination. Agent system 5 within a communications device 1 generates agent 4 and transmits the agent 4 to other communication devices 1. Agent system 5 within the communications device also receives an incoming agent 4 and performs a target processing assigned in the agent, sends back the agent to the origin address, forwards it to other communication devices 5 (agent system 5), and deletes the agent etc. The system program which performs the generating, deleting, and forwarding an agent is termed an agent system. In addition, a device (or a portion of the device) installed with such a system program is also termed an agent system.

When an agent performs a search processing for searching an information, for example, the agent 4 travels among a number of nodes to collect the information, and returns to report the result, if the search job must be cancelled, or more jobs added after the agent is initially transmitted, such a request must be sent to the travelling agent. This is only possible by transmitting a message to agent system 5 where the agent is currently residing.

Mainly, such functions of moving agent 4 and transmitting the messages to it are confirmed to an intra-network. When a number of intra-networks 3, 3' are connected, via a public network, such as the public switched telephone network or the Internet, as shown in Figure 1, it is often difficult or cumbersome to move an agent from an agent system 5 in network 3 to an agent system 5' in network 3', and it is not possible to transmit a message to a travelling agent (or agent system holding the agent).

The inconvenience is caused because of the following. As a start, we will explain how an agent moves in general. In the prior art, there used to be two methods to move an agent in a network, (1) the agent is given only a target processing, and a destination and a routing data are not given, and (2) the agent is given both the destination and the target processing, but not the routing data.

In the first method, the agent will move to an arbitrary destination (searching according to a rule), and execute the target processing. Once it is given the target processing, it is not necessary to reassign the target. However, there is no way to choose a route, so if the processing is sequential, and there is, for example, an application gateway in a firewall 7 which is a connecting point of network 3 with the public communication line 6, the attempt of the agent to pass through will be regarded as an access violation. The agent will be unable to move to the nodes of the device (agent system) on the other side of the firewall 7.

In the second method, when the agent is to be routed through a number of nodes of the specified devices, each node will have to be specified, as there is a 1 to 1 correspondence of destinations when the target processing is executed. Thus, if the target processing cannot be completed, the agent system at the origin address will have to specify all of the destinations again and direct another agent, which will result in dead time.

In either method mentioned above, the one in which the agent is given both a destination and the target processing or the one in which it is given only the target processing, the agent moves without knowing the resource status of the destination. If the resource in the destination is not available, for example the memory space is not sufficient to accommodate the agent, the agent will not be generated in that device. In this case, the agent can not return to the agent system at the origin address within the specified time, the agent server will have no alternative but to execute error processing, and the agent system at the origin address must set a number of destinations again and launch a new agent.

In order to solve the problems mentioned above, the applicant disclosed, as a first solution, how to keep the proper routing to reach to a destination in a network, and as a second solution, how to transmit the agent reliably, in the Japanese patent publication JP 11 282 683 and in the corresponding US patent US 6 473 761. The following functions are disclosed in the above application.
(1) Routine data for identifying the nodes which the agent needs to go to (usually the system does not specify the routing data, but it must specify the nodes to which the agent must travel). With this function, the agent system can specify the firewall in the routing data in order to send an agent to outside of the firewall.
(2) Deleting node information in the routing data, after an agent has already been routed to a node. With this function, the number of times the agent can visit a node will be decremented with each agent use, so the agent is not routed to an unnecessary node (one previously visited the allowed number of times), even if the routing order is not rearranged. This makes it certain that the agent moves to every node the system defined.
(3) Utilizing the information obtained before the travelling agent moves to an agent system. This is possible by the routing data.
(4) Reserving a memory area for the agent in the destination (such as program area, and communication band width etc.). With this function, the agent system can send the agent to an agent system, which is confirmed to be operable, and this ensures execution of the agent.
(5) Releasing the resource the agent used after the system confirms the agent is already routed. With this function, If the agent was not executed because of some reason at the destination, the agent system can re-send the agent or send the agent to another agent system. Thus it is possible to send an agent to a destination without failure.
(6) Converting the agent to an intermediate code, which the destining communication device can process. With this function, it is possible to process the agent even if the destining device executes a different processing code.

The functions of (1) through (4) are related to the first solution, how to keep the proper routing to reach to a destination in a network, and (5) and (6) relates to the second solution, how to transmit the agent reliably.

If the system mentioned above is performed, the agent 4 can be moved out of the firewall. In other words, the agent system 5 can transmit agent 4 to the communication device 1', which is connected in another network 3' connected via the public line 6, and execute the specified processing. If there are a number of processing locations, e.g. factories, connected to each other via public line 6 and each has an intra-network which is a closed type, an agent generated by agent system 5 of device 1 at one of the locations can be moved to a device at another location, and it can execute the specified program.

It is, however, not possible in the system mentioned above to transmit a message to the agent which has moved in another network 3' although the agent 4 can be transmitted out of the firewall 7 without failure. It is because the firewall has an access control program installed at the connecting point between the network 3 of the intra-network and the public line 6. The message can not be transmitted through the firewall, and this makes it impossible to send a message to agent 4 in another network 3'. In the agent system 5 at the original point, the address of the destination agent system 5' is stored in a memory.

If it is not possible to send a message to the agent on the other side of the firewall, the data renewal, such as adding, changing, or deleting the destination and job to be processed in the travelling agent 4, is not possible, and this makes the system inflexible.

Furthermore, US 5 790 789 discloses a distributed computing system comprising a plurality of computer hosts, a communication network for exchanging information and data between the computer hosts, and a plurality of services, including software-based services, distributed throughout the computing system. Each of the services within the present distributed computing system, including some basic system-services are adapted to perform prescribed functions in response to the receipt of an electronic message. The disclosed distributed computing system also includes a plurality of intelligent agents executing on the computer hosts and associated with one or more of the services, wherein an agent exercises control of an associated service by manipulating the electronic messages directed to and originating from the associated service. In addition, the services are adapted to cooperatively perform various tasks by exchanging electronic messages across the communication network via their associated agents.

WO 98/21662 A1 discoses itinerary based agent mobility wherein a mobile agent object executes a first method on a first computer, migrates from the first computer to a second computer, and executes a second method on the second computer. The first and second methods and first and second computers are designated in an itinerary. The agent includes both data and executable code which are serialized for transmission from the first computer to the second computer as data. The data containing the agent is then deserialized in the second computer to regenerate the agent in the form of an object. The executable code portion of the agent can be supplemented with code from a home codebase located on another computer.

### Summary of the invention

This invention is designed to overcome this deficiency mentioned above. An object of the invention is to transmit a message to an agent at the destination regardless of whether it is in or out of the network. A further object is to provide a switching agent system, which generates an information for such processing automatically, and makes it easy for the network operators, as no manual intervention is required.

The invention is defined in claims 1 and 5, respectively. Particular embodiments of the invention are set out in the dependent claims.

With this configuration of the firewall when a message is sent from the agent system (from another agent in the agent system at the original point) to the travelling agent at the destination address, the sender (originating) agent system can transmit the message without knowing the actual current address of the travelling agent, because the switching agent system in the firewall will handle the switching operation. Therefore, the sender (originating) agent system can send the message to the switching agent system in the firewall when the sender wishes to send the message to an agent out side of the firewall.

### Brief description of the drawings

Figure 1 illustrates a system configuration according to the prior art.
Figure 2 illustrates a system configuration according to this invention.
Figure 3 illustrates a model of agent system installed in an intra-network.
Figure 4 illustrates an ID address table of an agent address control unit in the agent system.
Figure 5 illustrates flow-chart (1) for explaining the function shown in Figure 4.
Figure 6 illustrates flow-chart (2) for explaining the function shown in Figure 4.
Figure 7 illustrates flow-chart (3) for explaining the function shown in Figure 4.
Figure 8 illustrates flow-chart (4) for explaining the function shown in Figure 4.
Figure 9 illustrates flow-chart (5) for explaining the function shown in Figure 4.
Figure 10 illustrates a configuration of an agent system installed in a firewall.
Figure 11 illustrates flow-chart (1) for explaining the function shown in Figure 10.
Figure 12 illustrates flow-chart (2) for explaining the function shown in Figure 10.
Figure 13 illustrates flow-chart (3) for explaining the function shown in Figure 10.
Figure 14 illustrates flow-chart (4) for explaining the function shown in Figure 10.
Figure 15 illustrates flow-chart (1) for explaining the function of an agent system located out of a firewall.
Figure 16 illustrates flow-chart (2) for explaining the function of an agent system located out of a firewall.
Figure 17 illustrates a model for explaining the operation of the agent system.
Figure 18 illustrates another model for explaining the operation of the agent system.
Figure 19 illustrates a model for explaining the operation of the agent system.

### Detailed description of the invention

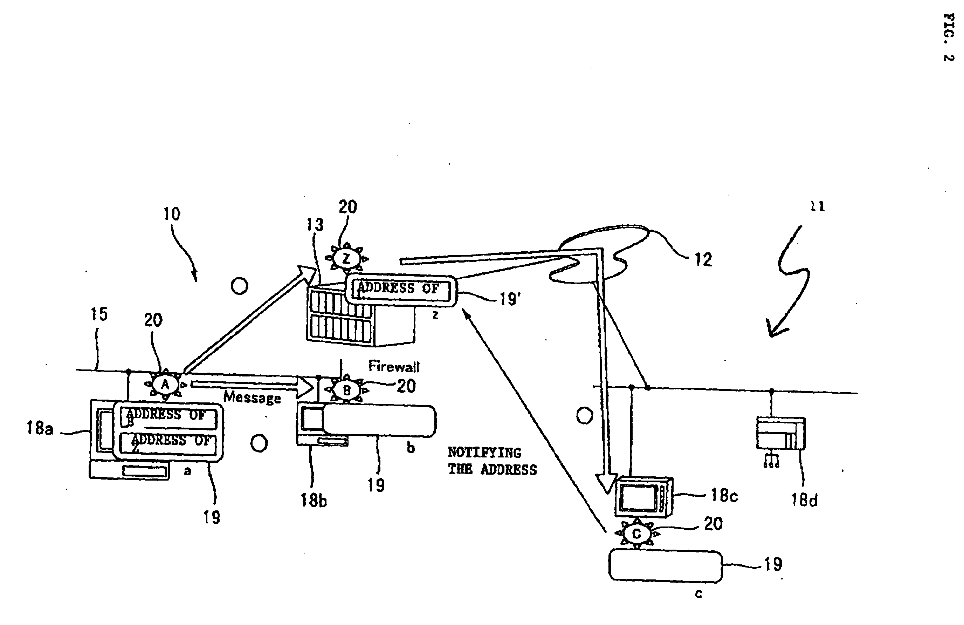

Figure 2 illustrates the configuration of a communication system having an agent system and a communication device constructed according to this invention. As shown in Figure 2, a number of intra-networks 10, 11 are connected via public line 12, and a firewall 13, which protects intra-network 10, is provided at the connection point between intra-network 10 and public line 12. Firewall 13 monitors the data and information, which are routed there. If firewall 13 detects a transmission request for data, which should not be accessed, it will prohibit the transmission from entering protected intra-network 10. Each intra-network 10, 11 is provided with a number of communication devices 18a, 18b, 18c, 18d,... via communication line 15 which can be a wire or wireless line.

In each communication device 18a, 18b, an agent system 19 is provided, and any agent system 19 can generate an agent 20. Agent 20 is transmitted to another agent system of another communication system to execute a specified processing.

According to this invention, a switching agent system 19' is provided. When agent 20 is transmitted to outside of the firewall 13, agent 20 must be transmitted via switching agent system 19' in firewall 13. When agent 20 arrives at the switching agent system 19' in firewall 13, agent system 19' can know both addresses of the origination and the destination of agent 20, and agent system 19' keeps both addresses in a memory. Switching agent system 19' also notifies the originating agent system 19 that the address of the destination of agent 20 is its own address, in other words, an address (z) of agent system 19' in firewall 13.

When agent system 19 receives the notice from switching agent system 19', agent system 19 notes that the destination address of agent 20 is changed to the address (z) which is the address of the switching agent system 19' and stores the new destination address for agent 20. After the destination address is set as above, agent system 19 will thereafter use the address (z) in the firewall as the destination address for every messages directed to agent 20 thereafter. When switching agent system 19' receives a message for agent 20 from agent system 19, switching agent system 19' will forward the message to the address of agent 20 which is stored in the memory, and the message can be forwarded to an agent 20 (C) which is outside of the firewall 13.

The transmission within the intra-network can be executed directly as before. When an agent 20 is sent from (a) to (b), as shown in Figure 2, the message is sent directly to the address (b) which agent system 19 stores in the memory since the address of (b) is stored in the memory of agent system 19 as the destination address of (b).

In this embodiment, as explained, switching agent system 19' is provided in the firewall 13, and switching agent system 19' has an address data list, which has both addresses of the destination and the origin for each agent 20. This arrangement makes it possible to forward the message from the origin to the destination via switching agent system 19'. This address data list is generated automatically in switching agent system 19' when agent 20 passes through it, and there is no need for an operator to make such a list manually. This is one of the advantages of this invention.

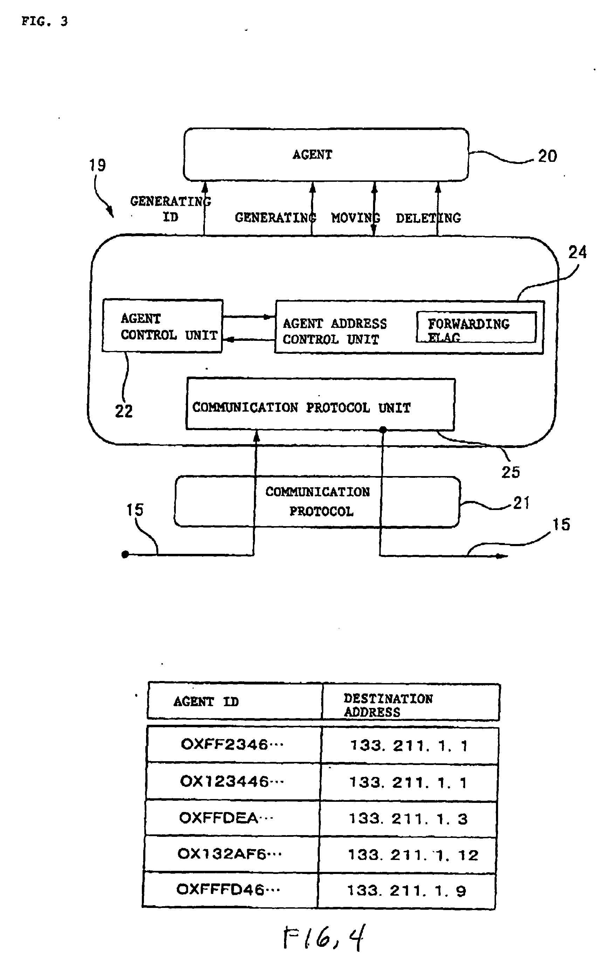

The details of the agent system of an embodiment will now be explained. Figure 3 illustrates the internal structure of an agent system 19 which is provided within the intra-network 10, 11. As shown in this figure, agent system 19 is connected to communication line 15 via communication protocol 21. Agent system 19 transmits and receives agent 20 and exchanges messages with other agent systems 19. Agent 20 is a mobile program, which is generated, deleted, and moved by itself. Thus, an agent system 19 controls every transmission of agent 20.

The actual internal structure of agent system 19 is as follows. It has 1) agent control unit 22 which generates, deletes, transmits mobile agent 20, 2) agent address control unit 24 to control the transmission status of agent 20 in control unit 22, in other words, it controls the destination and the origin of the agent 20, 3) communication protocol unit 25 to transmit and receive the agent and messages via communication protocol 21.

Agent control unit 22 is capable of controlling the ID which is assigned to every agent. Since there are many agents in the network, each agent has an ID. It is also possible to provide such function separately.

In agent address control unit 24, a forwarding flag is provided. When this flag is ON, agent system 19 will forward the received messages and agents, when it is OFF, it will not forward them. In the case this agent system 19 is installed in the intra-network 10, the flag is set as OFF in the initial status until a message or an agent is sent to it. When the agent system 19 forwards the message or agent, it is turned ON as is explained shortly.

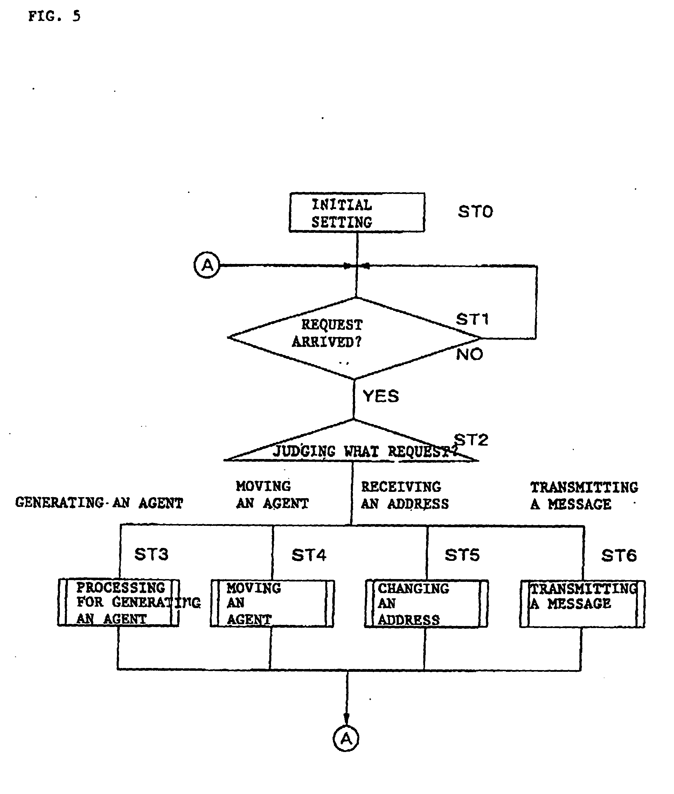

Agent address control unit 24 contains, for example as shown in Figure 4, an ID address table consisting of an agent ID of agents which were transmitted, and the destination address. When an agent comes in, the ID address table stores the ID of the agent, and when a message (destination address) comes in, the ID address table stores the address in the destination address corresponding with the ID.

Communication protocol unit 25 interfaces with agent address control unit 24, and controls the transmission and receiving of agents 20. It forwards the agent 20 generated in agent control unit 22, and transmits it to the specified destination. A message is forwarded the same way.

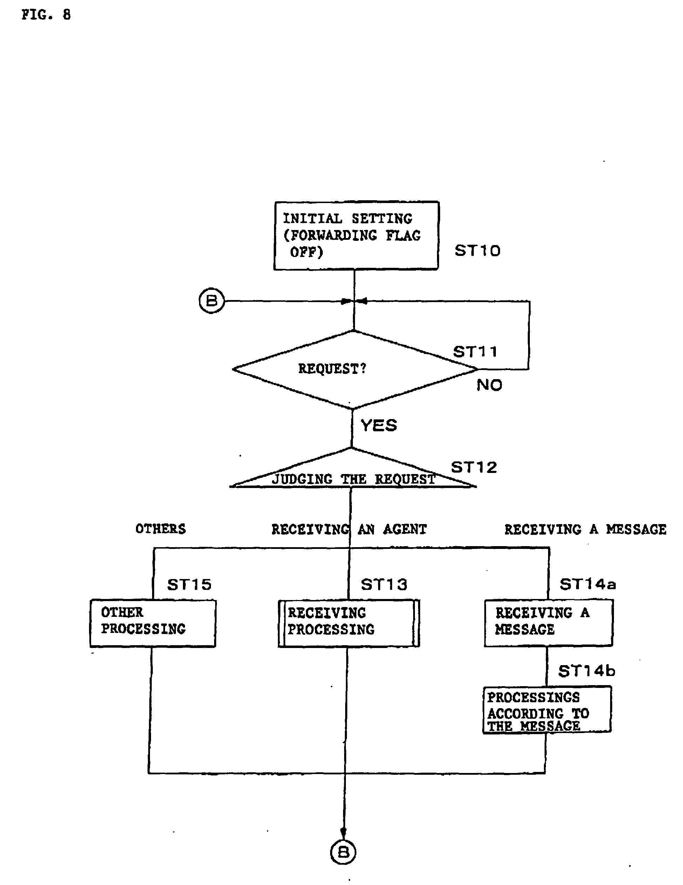

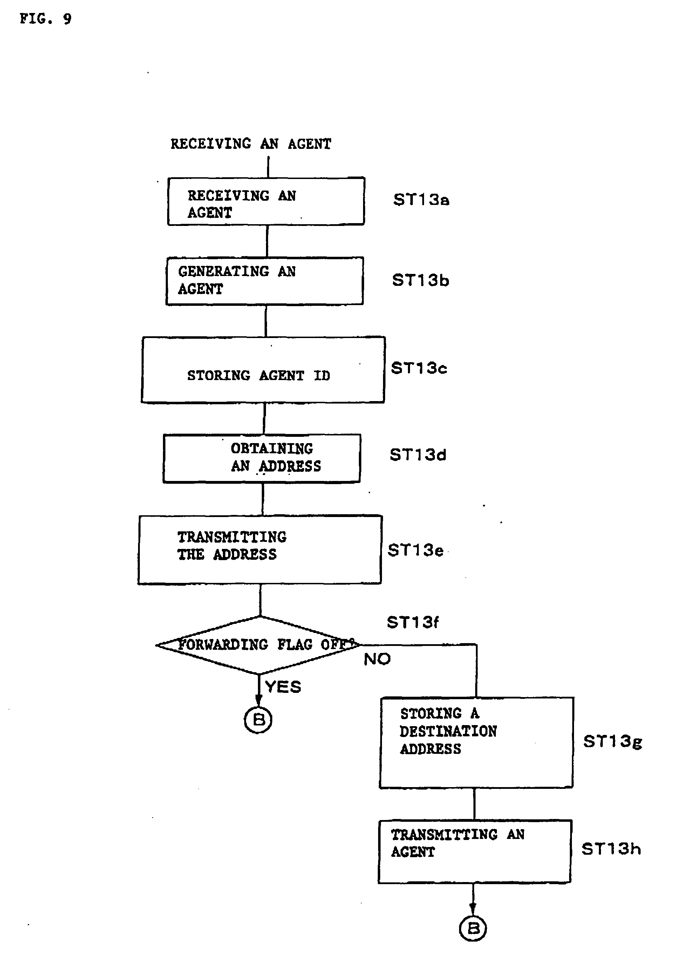

Now we will explain the function of the agent system 19 with reference to the drawings shown in Figure 5 through Figure 9. The flow charts in Figure 5 through Figure 7 show the transmission function in agent system 19(a) installed in communication device 18a in Figure 2, and the flow charts in Figures 8, 9 show the receiving function in agent system 19(b) installed in communication device 18(b). We will now explain the flow chart in detail.

As shown in Figure 5, after the initial processing (ST10), it will be in waiting mode. It will judge if there is a request to the agent system (ST1), If yes, the agent system will judge what kind of request it is (ST2). It executes the processing, such as generating an agent ST3, moving an agent ST4, changing an address ST5, transmitting a message ST7 according to the request, and then returns to step 1 which is a judging step.

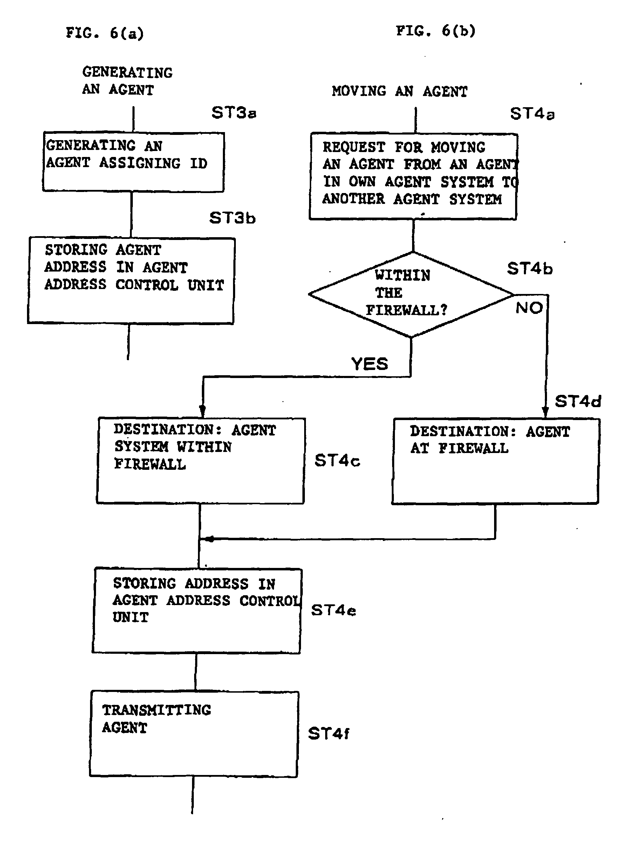

When the request is for generating an agent, as shown in Figure 6 (a), the agent system 19 generates an agent according to the generating request, and assigns an ID to the agent generated (ST3). This ID is then registered in ID control unit. Since the steps of generating an agent, and assigning it an ID, is the same, as in the prior art, the details are not repeated here. The agent address is then registered in agent address control unit 24 (ST3b). The address to be registered is an address of the agent system 19.

When the request is for moving an agent, as shown in Figure 6(b), when the agent system 19 receives a request from another agent for moving the agent threat (for example, agent generated at step 3 a), the agent system obtains the destination address from the agent making the move request (ST4a). For example, when moving from agent system 19(a) in communication device 18a to agent system 19(b) in communication 18b, the destination address is "b".

Based on the address obtained, the agent system will judge if the destination is within the intra-network or not (ST4b). If within the intra-network (within the firewall), the destination for the transmission is the agent system of the requested destination ("b" in Figure 2). If the destination out of the intra-network, that is, outside the firewall, the destination will be the address of agent system 19' in the firewall ("z" in Figure 2) (ST4d).

The agent system 19 will then store the address of the agent system judged at the previous step in the agent address control unit 24 (ST4e). The agent is, then, transmitted to the requested agent system (ST4f). The above processing is executed in agent control unit 22. The actual processing in ST4f is executed as follows. Agent control unit 22 sends a transmission request along with ID of the agent to communication protocol unit 25. Communication protocol unit 25, then, searches ID address table in agent address control unit 24, and obtains the destination address listed for the ID. The agent is then transmitted to the destination address.

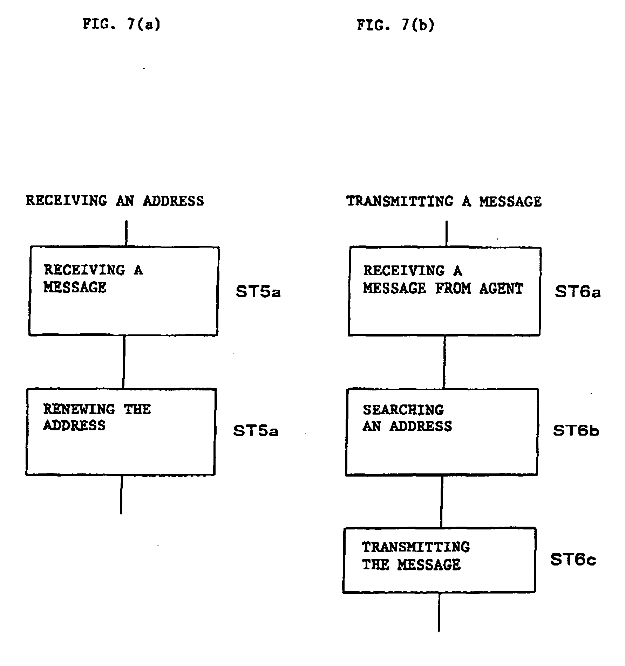

In the request for receiving an address, as shown in Figure 7(a), the agent system 19 will receive the address of the destination agent system as a message after the agent is transmitted (ST5a). The agent system will rewrite the destination address in ID address table of agent address control unit 24 to the received address.

When the request is for transmitting a message to the agent 19 at the destination, as shown in Figure 7 b), the agent system will receive an ID of the agent at the destination and the message from another agent, which is under control of this agent system. Using the ID as a search key, the address of the agent system in which the destining agent currently resides is searched in agent address control unit 24 (ST6b). The agent system will, then, transmit the message to the agent residing at the address searched (ST6c). This message transmission process is executed also by communication protocol unit 25 as the agent transmission process.

We will explain the receiving functions of the agent system 19. As shown in Figure 8, the agent system executes the initial setting, and set the forwarding flag OFF (ST10). The agent system goes into waiting mode, and judges if there comes a request to the agent system (ST11). If yes, the agent system will judge what kind of request it is (ST12), such as receiving an agent ST1, receiving a message ST14a, ST14b, and other processing ST15. After the agent system executes one of these, it returns to step 11.

When agent system 19 receives an agent (ST13a), as shown in Figure 9, the agent is generated, and activated so that it can be mobilized (ST13b). The agent ID is obtained from the generated agent, and is stored in ID address table in agent address control unit 24 (ST13c).

The agent system 19, then, obtains the origin address from the received agent (ST13d), and transmits its own address to the agent system at the origin address as a message (ST13e).

The agent system 19 checks the forwarding flag in agent address control unit 24. If the flag is OFF (ST13f), the receiving flag is completed, and it returns to step 11 for a waiting mode (normally it goes to this routine, because the flag is OFF at the initial process). The agent system, of course, executes the specified process according to the program in the agent. If the flag is previously set ON, it goes to No at step 13f, and goes to 13g. At step 13g, the agent system 19 will take out the destination address from the received agent, and transmit the agent to the agent system having the destination address which is same as the received address.

When the agent system 19 receives a message from another agent, it goes from ST12 to ST14a in Figure 8. The agent system receives the message from the agent in the other agent system (ST14a), it executes the processing according to the received message. This message is, for example, for changing the content of the previously received message, adding, deleting, or changing of a destination, and other various response.

The agent system 19 will, in response to receiving an agent and a message, execute them accordingly (ST15). When it completes this task, it returns back to step 11.

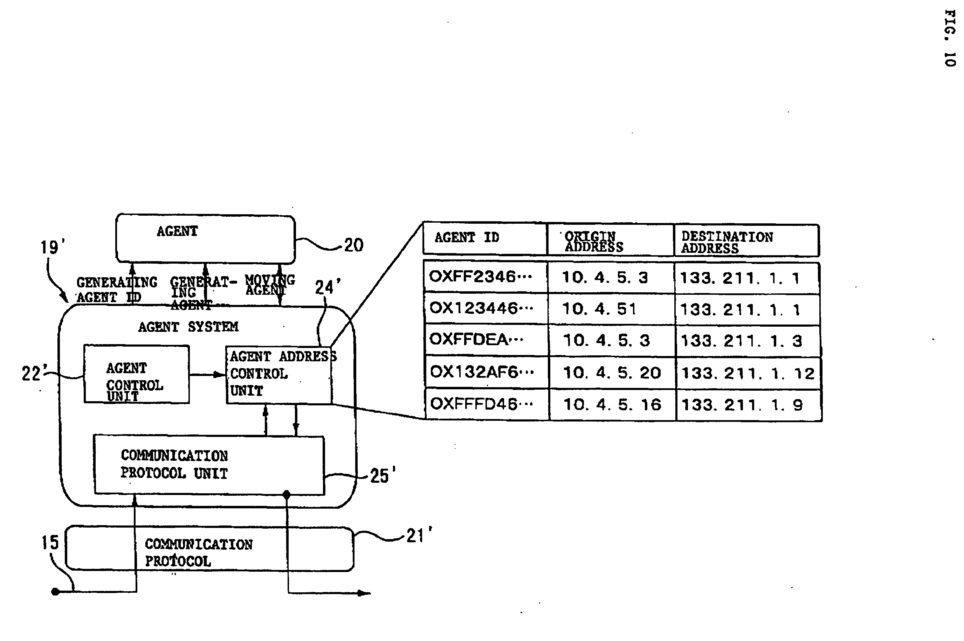

Switching agent system 19' which is installed in the firewall 13 and which is an essential part of this invention will now be explained. As shown in Figure 10, the basic structure of switching agent system 19' is identical to the agent system 19 installed within the intra-network 10 protected by the firewall. The difference between the two agent systems 19' and 19 is that the ID address table in agent address control unit 24' has an agent ID which is provided with two kinds of destination addresses, an origin address, and destination address. The address of the agent system within the intra-network protected by the firewall which sent the agent is stored in the origin address. The address of the agent system out of the network protected by the firewall to which the agent is destined to travel is stored in the destination address. When the agent arrives there, the switching agent system 19' stores the agent ID and the origin address. When the agent returns from the agent system at the destination, the destination address which is where the agent currently resides is stored in the destination address in the ID address table.

With the configuration mentioned above, switching agent system 19' can know about every other agent, in other words, switching agent system 19' has data concerning 1) which agent system sent the agent, and 2) where the agent currently resides. If switching agent system 19' receives a message directed to an agent, it knows where the agent is now, and the switching agent system 19' can forward the message to the right destination.

The forwarding flag (not shown here) is provided in switching agent system 19' (in agent address control unit 24'). When it is OFF, switching agent system 19' will not forward the message, and when it is ON, it forwards the message. Since the essential function of switching agent system 19' is to switch the messages from a network within the firewall to a location outside of the firewall, and from outside of the firewall to a network within the firewall, the flag is initialized in ON status. However, a forwarding flag is provided in the case that the agent system receives a message itself. For the basic function of switching the message, therefore, the forwarding flag is not always necessary. This is true for the forwarding flag installed in the agent system 19 within the network protected by the firewall (in this case, it is set to the status which does not forward a message).

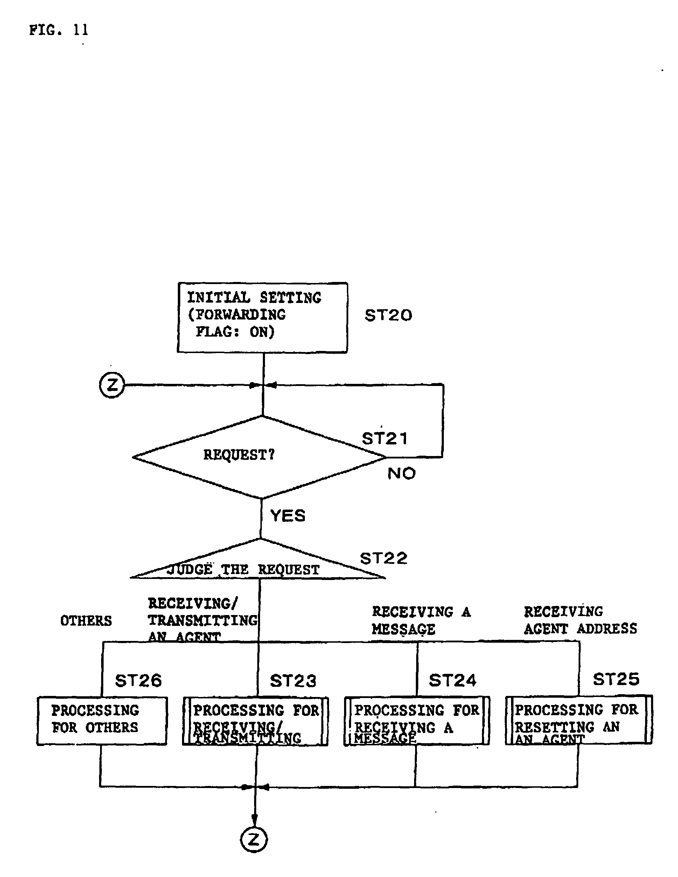

Because of the difference between agent systems 19 and 19', the function of agent control unit 22' is different as shown in Figure 11 through 14. The basic function of communication protocol unit 25' and communication protocol 21' are the same as like units in agent system 19.

As shown in Figure 11, agent system executes the initial setting, and sets the forwarding flag ON (ST20. It goes to the waiting mode, and agent system 19' will then judge if there is a request (ST21). If yes, switching agent system 19' will check the content of the request (ST22), it executes the processing according to the request, receiving/transmitting an agent (ST23), receiving a message (ST24), changing the agent address (ST25), other processing (ST26). After it executes one of these processing steps, it returns to the judging step in step 21, and it goes to the waiting mode.

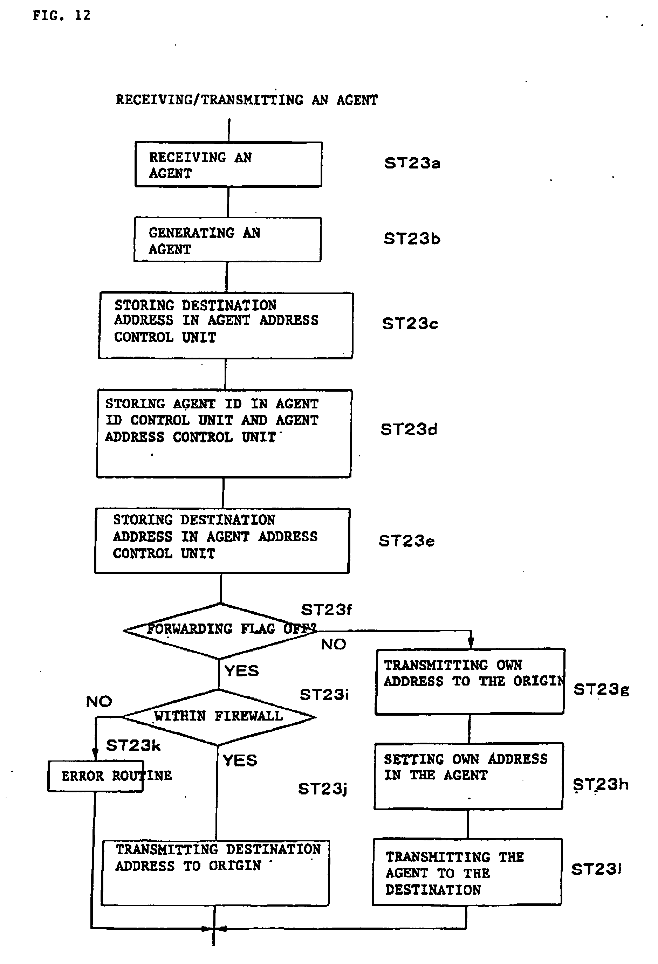

In the request for receiving/transmitting an agent, as shown in Figure 12, switching agent system 19' receives an agent (ST23a), it generates the agent and sets the agent to be ready to move (ST23b). Switching agent system 19' obtains the origin address and stores it in agent address control unit 24' (ST23c). It obtains also agent ID from the received agent, and stores it in agent ID control unit (installed in agent control unit 22' or a control unit provided separately) and agent address control unit 24' (ST23d). With this process, the data of ID and the address is stored in the ID address table shown in Figure 10. Switching agent system 19, then, obtains the destination address from the agent and stores it in agent address control unit 24' (ST23e).

Switching agent system 19' checks the forwarding flag provided in agent address control unit 24', and judges if the flag is now OFF (ST23f). Since the flag is initially set to ON, it goes normally to NO, and goes to step 23g. Switching agent system 19' searches the ID address table. When it obtains the origin address of the agent. Switching agent system 19' will send its own address to the agent system as a message (ST23g). Agent system stores its own address in the agent to be transmitted. With a reference to the agent address table, switching agent system 19' will then transmit the received agent to the destination address listed in the table (ST23i).

When an agent residing at agent system 19a in communication device 18a travels to agent system 19c in communication device 18c as shown in Figure 2, the agent ID and the address of "a" as the origin address is stored in the ID address table. In this transmission, the address of "z" which is an address of switching agent system 19' will be transmitted from switching agent system 19' to agent system 19a. The actual destination of the agent is agent system 19c on communication device 18c, which is located outside of the firewall 13. Switching agent system 19', however, tells agent system 19a a fake address of "z" as the destination address, which is an address of switching agent system 19', but not an actual address of "c". When agent system 19a receives the fake address of "z", it stores "z" in the destination address of the agent sent to "c". In other words, when agent system 19 transmits a message to outside of the firewall 13, it transmits only to switching agent system 19' without knowing the actual address of the agent. This function makes it possible for agent system 19 to send an agent to outside of the firewall in the same manner as the transmission to the agent within the firewall 13.

In case the forwarding flag is OFF, the judgement at step 23f is YES, it goes to step 23i, and switching agent system 19' will judge if the destination address is within or out of the firewall 13 (ST23i). When there is no forwarding, it is normally within the firewall, and it goes to step 23j. It then transmits the destination address to the origin address, and completes the process. This message will not go outside of the firewall without forwarding a message. If it is NO at the judgement, it goes to error routine (ST13k). Of course, the switching agent system 19' will execute the specified process according to the program defined in the received agent.

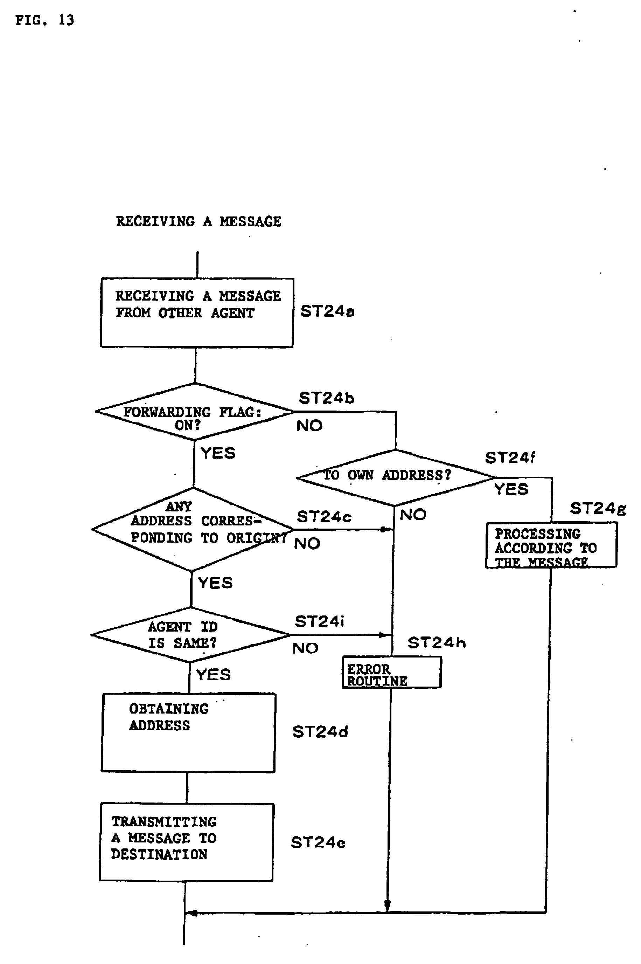

When the request is for transmitting a message to the agent 19 at the destination, as shown in Figure 7 (b), it is executed at ST24 of Figure 11 according to the flow chart shown in Figure 13. In other words, it goes to step 24a, and it receives a message sent from other agent system (ST24a). Switching agent system 19' will, then, check the flag (ST24b), if the flag is ON, it goes to step 24c, and searches agent address control unit 24' to find out if there is a destination address which is corresponding to the origin address (ST24c).

If there is such destination address, agent system, then, checks if the agent ID is identical to the ID listed there (ST2li). If not identical, it goes to the step 24h for an error routine. If identical, it goes to step 24d. Agent system obtains the destination address (agent at the destination address), and transmits the message to the destination address, and completes the processing (ST24e).

If the flag is OFF, it judges if the destination is it's own address or not (ST 24f), if yes, it executes the processing according to the received message (ST24g). If the destination address is not it's own address, or there is no destination address which corresponds to the origin address even when the flag is ON, it goes to the error routine (ST24h), and completes the processing.

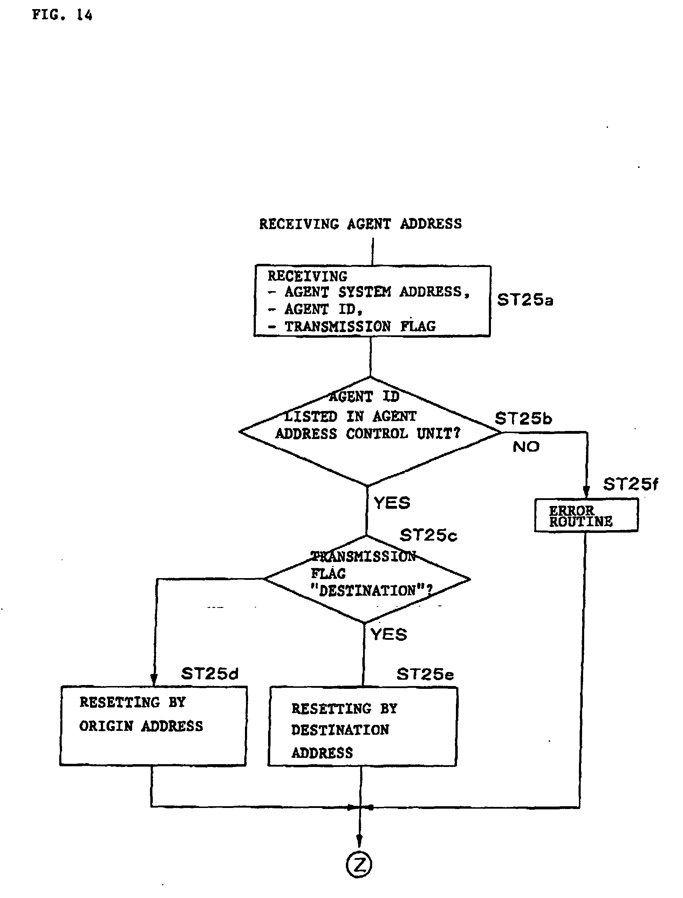

When agent system receives an agent address, it judges at step 22 in Figure 11, and executes the processing according to the flow chart shown in Figure 14. Switching agent system 19' in the firewall 13 will receive the address of the agent system, an agent ID, and a transmission flag from the other agent system (destination of the agent). Switching agent system 19' will check if there is a same agent ID listed in agent address control unit 24'. If not, it goes to the error routine (ST25f).

If there is a same agent ID, agent system checks if the transmission flag is for "destination" or not (ST25c). If it is for "destination", the address of the received agent system is stored in the destination address in agent address control unit 24' (ST25e). If it is not "destination", but it is for "origin", the origin address in the agent address control unit 24' is replaced by the address of the received agent system (ST25d). With this function, when an agent travels to outside of the firewall, it is possible to renew or change the address from both sides.

When agent system receives a request, which is not an agent, a message, or an agent address, it executes the processing according to such request (ST26). When each processing is completed, then it returns to step 21 for the waiting mode.

Agent system 19, which is out of firewall 13, (such as agent system installed in communication device 18c in Figure 2), and which receives a message and an agent from switching agent system 19' is an ordinary agent system, and it, therefore, executes the processing shown in the flow chart of Figures 8, 9. It transmits/receives data to and from the switching agent system 19', and it also receives a message and an agent from the switching agent system 19'.

Agent system 19 transmits it's own address as a message to the origin address, which is an address of switching agent system 19'. Switching agent system 19' which receives the message stores the destination address in the ID address table. This processing is the same as the one switching agent system 19' executes when it receives a message as shown in Figure 12.

In this preferred embodiment, an agent (or an agent system) within the firewall thinks that it transmits and receives a data to and from the ordinary destination agent (or agent system), but in fact, it communicates with switching agent system 19'. The same thing is true in agent system 19, which is out of the firewall. Agent system 19 thinks that the switching agent system 19' sent the agent and message because the origin address is switching agent system 19', so agent system 19 will communicate with switching agent system 19'. It is, however, switching agent system 19' that will forward the data to the actual destination address of agent system 19, which is within the firewall 13.

Both of an agent system at origin and an agent system at destination will, therefore, communicate with switching agent system 19', and they can transmit and receive data to/from each other via switching agent system 19'.

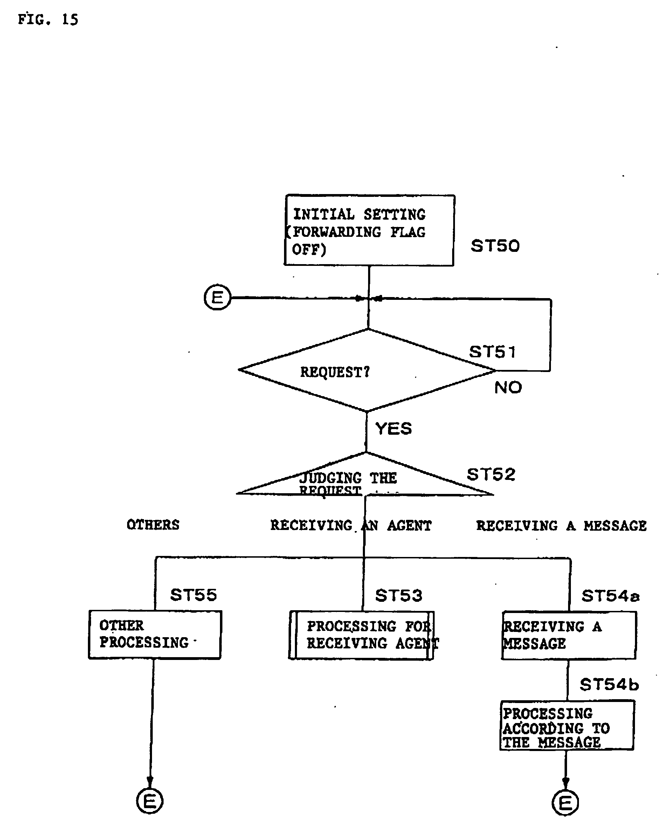

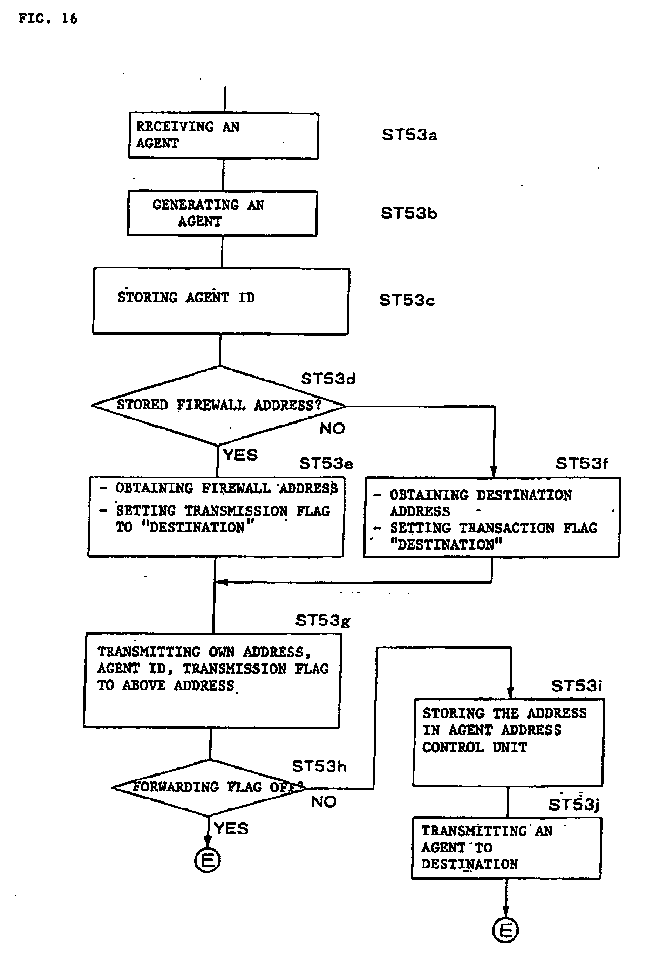

When an agent is transmitted via the firewall 13, agent system 19c at the destination functions as shown in Figure 15 and Figure 16. As shown in Figure 15, agent system 19c executes the initial setting, and sets the forwarding flag OFF (ST50). It goes into the waiting mode, judges if there is a request or not (ST51). If Yes, it judges what kind of request it is (ST52), and the agent system executes the processing (for receiving an agent (ST53), for receiving a message (ST54a, ST54b), and for other processing (ST55)) according to the request, and after the execution of one of them, it returns to the judging step (step 51).

In case of receiving an agent, as shown in Figure 16, agent system 19 will generate an agent and set it ready to transmit (ST 53b) after it receives the agent (ST5a). Agent system 19c will, then, obtain the agent ID from the generated agent, and store it in the agent ID control unit (or other control unit for it) (ST53c).

As a next step, agent system 19c will judge if the address of the firewall is already stored, and if it stays as the initial setting, then it judges that the address of the firewall is empty (it is not stored).

If the address of the firewall is stored, it goes to step 53c, and agent system 19c obtains the address of the firewall from the received agent. The transmission flag is set to "destination". If the address of the firewall is not stored, it obtains the address of the agent system at the origin, and sets the transmission flag as "origin" (ST53f).

After one of the above processing is completed, agent system 19c will transmit it's own address of the agent system 19c (destination address: agent system which received the agent), agent ID and transmission flag (ST53g). With this transmission, the destination address which is out of the firewall, and agent ID are notified to switching agent system 19' in the firewall 13.

After this step, agent system 19c will check the forwarding flag in agent control unit 22. If it is OFF (ST53h), it completes the receiving process, and it returns to step 51 for the waiting mode (the forwarding flag was set to OFF, so normally it goes to this routine). The agent system, of course, executes the specified processing according to the program in the received agent.

If the forwarding flag is set as ON because of external reasons, it judges NO at step 53h, and it goes to step 53i. Agent system 19c obtains the destination address from the received agent, and stores it in the agent address control unit. Then, agent system 19c will transmit the received agent to the agent system at the destination (ST53j).

When agent system 19c receives a message from another agent, it goes to step 14a at the branch of step 12, and receives a message, which was sent from an agent in another agent system. It, then, executes the processing according to the message (ST14b). The processing includes changing the processing, or adding, deleting, changing the destination, and various responding processing.

In the case of other than receiving an agent or a message, agent system 19c will execute the processing according to the request (ST15). When it is completed, then it goes to step 11 for the waiting mode.

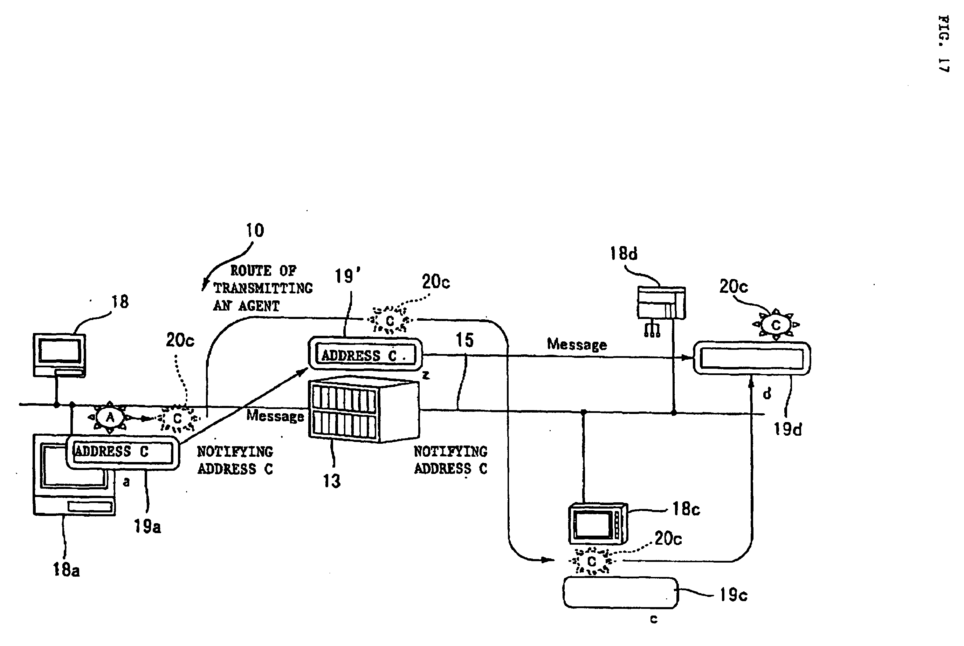

In the above disclosure, we explain the functions, which are 1) transmitting a message within and out of the firewall, 2) transmitting the agent to the firewall, 3) always notifying the destination address to the agent system if the agent is transmitted out of the firewall. With these functions, the following advantages will be achieved. As shown in Figure 17, let's suppose that agent 20c residing at agent system 10a of communication device 18a travels to agent system 19c of communication device 18c. In this case, not only agent ID of 20c is stored in the agent system control unit 24' of agent system 19', installed in firewall 13, but also the address of "a" is stored as the origin address. After these are installed there, let's suppose that agent 20c is further transmitted to agent system 19d of communication device 18d from agent system 19c of communication device 18s.

In such case, agent 20c will notify switching agent system 19' in the firewall of the new address of the agent system at the final destination ("d" in the Figure 17) when agent 20c reaches to agent system 19d. As shown in Figure 25a, the destination address in agent system control unit 24' in switching agent system 19' will be changed to 'd" from "c".

After the destination address is changed, if a message is transmitted from agent system 19a of communication device 18a to agent 20c which is now traveling, agent system 19a can transmit the message to switching agent system 19'. The agent system which receives the message will, then, forward agent 20c to agent system 19d where agent 20c is actually residing.

According to an embodiment, transmission of the message within the firewall is also provided. A number of communication devices 18a, 18b, 18c,..are connected via communication line 15 within the same intra-network 10. Agent systems 19a, 19b, 19c,.. are installed in communication devices 18a, 18b,18c,.. respectively. Agent 20c is initially generated in agent system 19a. If there is a necessity to route from 19a to 19b, then to 19c, for collecting a data from agent system 19b before arriving at 19c, agent system 19b which is in the middle functions like the firewall because it switches the communication between 19a and 19c.

In this case, agent 20c must travel to agent system 19b. It is, however, more convenient if agent system 19a transmits a message directly to agent system 19c after the agent 20c moves to agent system 19c.

If the function of agent system 19b is set the same as the one of switching agent system 19' installed in the firewall. In this case, the forwarding flag in agent system 19b can be set as OFF.

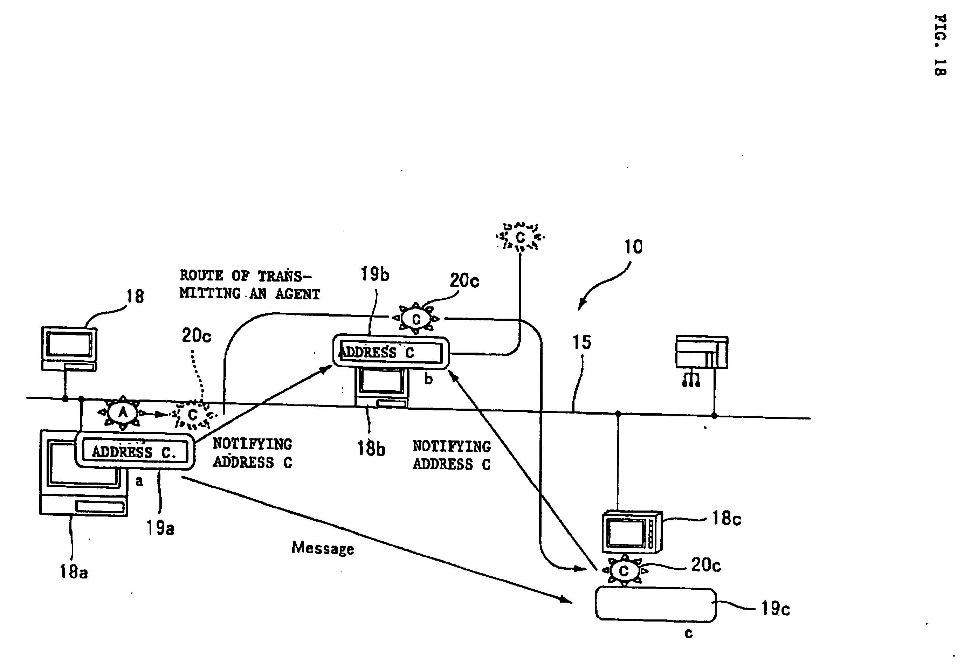

If the forwarding flag is set OFF, it goes to YES at step 23f in Figure 12, and it goes YES at step 23i because it is within the firewall. The step 23i is executed. In this step, agent system 19b will transmit the destination address to the agent system at the origin address. In the model shown in Figure 18, the address of agent system 19c is transmitted to agent system 19a. After agent system 19a receives it, it executes the function shown in Figure 7(a), and it stores the received address in the destination address listed in the ID address table of the agent system address control unit 24. When agent system 19a sends a message, it searches the table and picks up the address of agent system 19c, and it can transmit the message directly to agent system 19c.

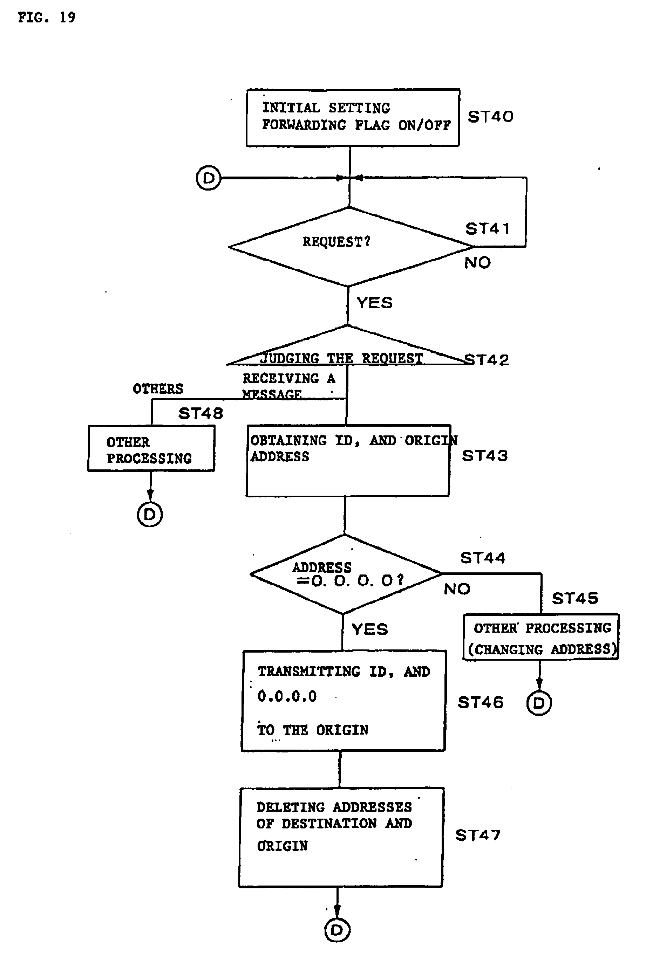

Figure 19 shows another preferred embodiment of this invention. Agent systems 19' and 19b are a type of switching agent system. It will be necessary in this type of agent system that, if the switching is completed and the switched agent is deleted thereafter, every data related to the deleted agent must be removed from the switching agent system. In other words, ID data, destination address, origin address are supposed to be deleted from the ID address table in the agent system address control unit.

To execute such a function, an embodiment has a data deleting function shown in the flow chart of Figure 19. In the figure, after the initial setting, it goes to the waiting mode (ST40, ST41). When the agent system receives a request, it executes the processing according to the request. It obtains the agent ID and the origin address when it receives the request (ST43).

The agent system judges if the address obtained above has a specific code, such as "0. 0. 0. 0" (ST44), if YES, it goes to step 46, then the agent system will send the agent ID and the address of "0. 0. 0. 0" to the origin address (ST46). Then, the agent system will delete the addresses of the destination and origin which are corresponding to the agent ID (ST47). With this transaction, the address data of the already deleted agent is eliminated.

In step 46, the next agent system will execute the same processing to delete every data related to the already deleted agent from the ID address table.

While various embodiments of the invention have been described as illustrated, they are only exemplary as many modifications and substitutions can be made. Accordingly, the invention is not limited by the foregoing description but is only limited by the scope of the attached claims.

## Claims

1. A firewall comprising a switching agent system (19') for switching messages intended for a travelling agent (20) from an agent system (19), referred to as the originating agent system (19) and which is the agent system (19) which has sent previously the travelling agent to said switching agent system (19'), said originating agent system (19) being in a network (10) within the firewall (13), to the travelling agent, said travelling agent being currently present in an agent system which is referred to as the destination agent system (19) and which is located outside of the firewall (13), comprising:
a device which notifies the originating agent system (19) that the address of the destination of the travelling agent (20) is the address of the switching agent system (19');
a memory (24') which stores an address data list for the travelling agent (20), said address data list including an identification number of said travelling agent (20), an origination address being an address of said originating agent system (19) and a destination address being an address of said destination agent system; and
a forwarding device (22') which receives a message destined for said travelling agent (20), said forwarding device (22') reviewing said memory (24') for address data for said travelling agent (20) based on agent identification number, determining the current location of said travelling agent based on said destination address associated with said agent identification number and forwarding said message to the current location of said travelling agent.

2. The firewall as in claim 1, further comprising an address data generator which generates the destination address data of the travelling agent (20) when said travelling agent passes through said switching agent system (19'), said destination address data being stored in said memory (24').

3. The firewall as in claim 1 or 2, further comprising a deleting device which deletes said address data of said travelling agent (20) in said memory (24') when said switching agent system (19') is notified that said travelling agent is no longer functional.

4. The firewall as in any of claims 1 to 3, further comprising a renewal device which renews said destination address data of said travelling agent (20) in said memory (24') when said switching agent system (19') is notified that said travelling agent (20) has moved to another location.

5. A method performed in switching agent system (19') of a firewall (13) for switching messages intended for a travelling agent (20) from an agent system (19), referred to as the originating agent system (19) and which is the agent system (19) which has sent previously the travelling agent to said switching agent system (19'), said originating agent system (19) being in a network (10) within the firewall (13), to the travelling agent, said travelling agent being currently present in an agent system which is referred to as the destination agent system (19) and which is located outside of the firewall (13), said method comprising the following steps:
notifying the originating agent system (19) that the address of the destination of the travelling agent (20) is the address of the switching agent system (19');
storing an address data list for the travelling agent (20) in a memory (24'), said address data list including an identification number of said travelling agent (20), an origination address being an address of said originating agent system (19) and a destination address being an address of said destination agent system;
receiving a message destined for said travelling agent (20);
reviewing said memory (24') for address data for said travelling agent (20) based on agent identification number;
determining the current location of said travelling agent based on said destination address associated with said agent identification number and
forwarding said message to the current location of said travelling agent.

6. The method of claim 5, further comprising the step of generating the destination address data of the travelling agent (20) when said travelling agent passes through said switching agent system (19'), said destination address data being stored in said memory (24').

7. The method of claim 5 or 6, further comprising the step of deleting said address data of said travelling agent (20) in said memory (24') when said switching agent system (19') is notified that said travelling agent is no longer functional.

8. The method of any of claims 5 to 7, further comprising the step of renewing said destination address data of said travelling agent (20) in said memory (24') when said switching agent system (19') is notified that said travelling agent (20) has moved to another location.

## Patentansprüche

1. Firewall mit einem Vermittlungsagentensystem (19') zum Vermitteln von Nachrichten, die für einen sich bewegenden Agenten (20) bestimmt sind, von einem Agentensystem (19), das als Ursprungsagentensystem (19) bezeichnet wird und das das Agentensystem (19) ist, das vorher den sich bewegenden Agenten zum Vermittlungsagentensystem (19') gesandt hat, wobei sich das Ursprungsagentensystem (19) in einem Netzwerk (10) innerhalb der Firewall (13) befindet, zum sich bewegenden Agenten, wobei sich der sich bewegende Agent gerade in einem Agentensystem befindet, das als Zielagentensystem (19) bezeichnet wird und das sich außerhalb der Firewall (13) befindet, aufweisend:
eine Einrichtung, die das Ursprungsagentensystem (19) benachrichtigt, dass die Adresse des Zielorts des sich bewegenden Agenten (20) die Adresse des Vermittlungsagentensystems (19') ist;
einen Speicher (24'), der eine Adressendatenliste für den sich bewegenden Agenten (20) speichert, wobei die Adressendatenliste eine Identifikationsnummer des sich bewegenden Agenten (20), eine Ursprungsadresse, die eine Adresse des Ursprungsagentensystems (19) ist, und eine Zieladresse, die eine Adresse des Zielagentensystems ist, aufweist; und
eine Weiterleitungseinrichtung (22'), die eine Nachricht empfängt, die für den sich bewegenden Agenten (20) bestimmt ist, wobei die Weiterleitungseinrichtung (22') den Speicher (24') auf Adressendaten für den sich bewegenden Agenten (20) auf der Basis der Agentenidentifikationsnummer überprüft, den aktuellen Ort des sich bewegenden Agenten auf der Basis der der Agentenidentifikationsnummer zugeordneten Zieladresse ermittelt und die Nachricht zum aktuellen Ort des sich bewegenden Agenten weiterleitet.

2. Firewall nach Anspruch 1, welche ferner einen Adressendatengenerator aufweist, der die Zieladressendaten des sich bewegenden Agenten (20) erzeugt, wenn der sich bewegende Agent durch das Vermittlungsagentensystem (19') läuft, wobei die Zieladressendaten im Speicher (24') gespeichert werden.

3. Firewall nach Anspruch 1 oder 2, welche ferner eine Löscheinrichtung aufweist, die die Adressendaten des sich bewegenden Agenten (20) im Speicher (24') löscht, wenn das Vermittlungsagentensystem (19') benachrichtigt wird, dass der sich bewegende Agent nicht mehr funktional ist.

4. Firewall nach einem der Ansprüche 1 bis 3, welche ferner eine Erneuerungseinrichtung aufweist, die die Zieladressendaten des sich bewegenden Agenten (20) im Speicher (24') erneuert, wenn das Vermittlungsagentensystem (19') benachrichtigt wird, dass sich der sich bewegende Agent (20) zu einem anderen Ort bewegt hat.

5. Verfahren, das in einem Vermittlungsagentensystem (19') einer Firewall (13) durchgeführt wird, um Nachrichten, die für einen sich bewegenden Agenten (20) bestimmt sind, von einem Agentensystem (19), das als Ursprungsagentensystem (19) bezeichnet wird und das das Agentensystem (19) ist, das vorher den sich bewegenden Agenten zum Vermittlungsagentensystem (19') gesandt hat, wobei sich das Ursprungsagentensystem (19) in einem Netzwerk (10) innerhalb der Firewall (13) befindet, zum sich bewegenden Agenten zu vermitteln, wobei der sich bewegende Agent sich gerade in einem Agentensystem befindet, das als Zielagentensystem (19) bezeichnet wird und das sich außerhalb der Firewall (13) befindet, wobei das Verfahren die folgenden Schritte aufweist:
Benachrichtigen des Ursprungsagentensystems (19), dass die Adresse des Zielorts des sich bewegenden Agenten (20) die Adresse des Vermittlungsagentensystems (19') ist;
Speichern einer Adressendatenliste für den sich bewegenden Agenten (20) in einem Speicher (24'), wobei die Adressendatenliste eine Identifikationsnummer des sich bewegenden Agenten (20), eine Ursprungsadresse, die eine Adresse des Ursprungsagentensystems (19) ist, und eine Zieladresse, die eine Adresse des Zielagentensystems ist, aufweist;
Empfangen einer für den sich bewegenden Agenten (20) bestimmten Nachricht;
Überprüfen des Speichers (24') auf Adressendaten für den sich bewegenden Agenten (20) auf der Basis der Agentenidentifikationsnummer;
Ermitteln des aktuellen Orts des sich bewegenden Agenten auf der Basis der der Agentenidentifikationsnummer zugeordneten Zieladresse; und
Weiterleiten der Nachricht zum aktuellen Ort des sich bewegenden Agenten.

6. Verfahren nach Anspruch 5, welches ferner den Schritt des Erzeugens der Zieladressendaten des sich bewegenden Agenten (20), wenn der sich bewegende Agent durch das Vermittlungsagentensystem (19') läuft, aufweist, wobei die Zieladressendaten im Speicher (24') gespeichert werden.

7. Verfahren nach Anspruch 5 oder 6, welches ferner den Schritt des Löschens der Adressendaten des sich bewegenden Agenten (20) im Speicher (24'), wenn das Vermittlungsagentensystem (19') benachrichtigt wird, dass der sich bewegende Agent nicht mehr funktional ist, aufweist.

8. Verfahren nach einem der Ansprüche 5 bis 7, welches ferner den Schritt des Erneuerns der Zieladressendaten des sich bewegenden Agenten (20) im Speicher (24'), wenn das Vermittlungsagentensystem (19') benachrichtigt wird, dass sich der sich bewegende Agent (20) zu einem anderen Ort bewegt hat, aufweist.

## Revendications

1. Pare-feu comprenant un système d'agent de commutation (19') destiné à commuter des messages prévus pour un agent en déplacement (20) à partir d'un système d'agent (19), appelé système d'agent d'origine (19) et qui est le système d'agent (19) qui a précédemment envoyé l'agent en déplacement audit système d'agent de commutation (19'), ledit système d'agent d'origine (19) étant dans un réseau (10) à l'intérieur du pare-feu (13), à l'agent en déplacement, ledit agent en déplacement étant actuellement présent dans un système d'agent qui est appelé système d'agent de destination (19) et qui est situé à l'extérieur du pare-feu (13), comprenant :
un dispositif qui notifie au système d'agent d'origine (19) que l'adresse de destination de l'agent en déplacement (20) est l'adresse du système d'agent de commutation (19'),
une mémoire (24') qui mémorise une liste de données d'adresses pour l'agent en déplacement (20), ladite liste de données d'adresses comprenant un numéro d'identification dudit agent en déplacement (20), une adresse d'origine étant une adresse dudit système d'agent d'origine (19) et une adresse de destination étant une adresse dudit système d'agent de destination, et
un dispositif de réexpédition (22') qui reçoit un message destiné audit agent en déplacement (20), ledit dispositif de réexpédition (22') examinant ladite mémoire (24') pour des données d'adresses pour ledit agent en déplacement (20) sur la base du numéro d'identification d'agent, déterminant l'emplacement actuel dudit agent en déplacement sur la base de ladite adresse de destination associée audit numéro d'identification d'agent et faisant suivre ledit message à l'emplacement actuel dudit agent en déplacement.

2. Pare-feu selon la revendication 1, comprenant en outre un générateur de données d'adresses qui génère les données d'adresses de destination de l'agent en déplacement (20) lorsque ledit agent en déplacement passe par ledit système d'agent de commutation (19'), lesdites données d'adresses de destination étant mémorisées dans ladite mémoire (24').

3. Pare-feu selon la revendication 1 ou 2, comprenant en outre un dispositif d'effacement qui efface lesdites données d'adresse dudit agent en déplacement (20) dans ladite mémoire (24') lorsque ledit système d'agent de commutation (19') se voit notifier que l'agent en déplacement n'est plus fonctionnel.

4. Pare-feu selon l'une quelconque des revendications 1 à 3, comprenant en outre un dispositif de renouvellement qui renouvelle lesdites données d'adresses de destination dudit agent en déplacement (20) dans ladite mémoire (24') lorsque ledit système d'agent de commutation (19') se voit notifier que l'agent en déplacement (20) s'est déplacé à un autre emplacement.

5. Procédé exécuté dans un système d'agent de commutation (19') d'un pare-feu (13) destiné à commuter des messages prévus pour un agent en déplacement (20) à partir d'un système d'agent (19), appelé système d'agent d'origine (19) et qui est le système d'agent (19) qui a précédemment envoyé l'agent en déplacement audit système d'agent de commutation (19'), ledit système d'agent d'origine (19) étant dans un réseau (10) à l'intérieur du pare-feu (13), à l'agent en déplacement, ledit agent en déplacement étant actuellement présent dans un système d'agent qui est appelé système d'agent de destination (19) et qui est situé à l'extérieur du pare-feu (13), ledit procédé comprenant les étapes suivantes consistant à :
notifier au système d'agent d'origine (19) que l'adresse de destination de l'agent en déplacement (20) est l'adresse du système d'agent de commutation (19'),
mémoriser une liste de données d'adresses pour l'agent en déplacement (20) dans une mémoire (24'), ladite liste de données d'adresses comprenant un numéro d'identification dudit agent en déplacement (20), une adresse d'origine étant une adresse dudit système d'agent d'origine (19) et une adresse de destination étant une adresse dudit système d'agent de destination,
recevoir un message destiné audit agent en déplacement (20),
examiner ladite mémoire (24') pour y rechercher des données d'adresses pour ledit agent en déplacement (20) sur la base d'un numéro d'identification d'agent,
déterminer l'emplacement actuel dudit agent en déplacement sur la base de ladite adresse de destination associée audit numéro d'identification d'agent, et
faire suivre ledit message vers l'emplacement actuel dudit agent en déplacement.

6. Procédé selon la revendication 5, comprenant en outre l'étape consistant à générer des données d'adresses de destination de l'agent en déplacement (20) lorsque ledit agent en déplacement passe par ledit système d'agent de commutation (19'), lesdites données d'adresses de destination étant mémorisées dans ladite mémoire (24').

7. Procédé selon la revendication 5 ou 6, comprenant en outre l'étape consistant à effacer lesdites données d'adresses dudit agent en déplacement (20) dans ladite mémoire (24') lorsque ledit système d'agent de commutation (19') se voit notifier que l'agent en déplacement n'est plus fonctionnel.

8. Procédé selon l'une quelconque des revendications 5 à 7, comprenant en outre l'étape consistant à renouveler lesdites données d'adresses de destination dudit agent en déplacement (20) dans ladite mémoire (24') lorsque ledit système d'agent de commutation (19') se voit notifier que ledit agent en déplacement (20) s'est déplacé vers un autre emplacement.
